# EUROPEAN PATENT APPLICATION

(11) **EP 3 862 825 A1**
(43) Date of publication of application: **11.08.2021**
(21) Application number: 19869670.0
(22) Date of filing: 01.10.2019
(51) Int. Cl.: G05B 19/048

(54) **CONTROL SYSTEM, SUPPORT DEVICE, AND PROGRAM**

(30) Priority: 02.10.2018 JP 2018187585
(71) Applicant: OMRON CORPORATION, Kyoto-shi, Kyoto 600-8530 (JP)
(72) Inventor: SUZUKI, Yuji, Kizugawa-shi, Kyoto 619-0283 (JP); SATO, Fumiaki, Kizugawa-shi, Kyoto 619-0283 (JP); FUJIMURA, Ryosuke, Kizugawa-shi, Kyoto 619-0283 (JP); TAMURA, Yoshihide, Kizugawa-shi, Kyoto 619-0283 (JP); MATSUGAMI, Masakazu, Kizugawa-shi, Kyoto 619-0283 (JP); TANAKA, Yu, Kizugawa-shi, Kyoto 619-0283 (JP)
(74) Representative: Emde, Eric
(86) International application number: PCT/JP2019/038770
(87) International publication number: WO 2020/071373

(57) **Abstract**

The present invention makes it possible to reduce a load associated with the transfer of parameters. This control system is equipped with a first and second controller connected to a network, and a drive device for driving a motor in accordance with a command from the first controller. The drive device includes a memory for storing a safety program that implements a safety function, and a parameter group referenced by the program. The second controller transmits commands related to operation of the safety function to the drive device. A support device capable of connecting to the network generates the parameter group, and reduces the size of the parameter group when the parameter group is transmitted to the drive device, such that the parameter group can be restored by the drive device.

## Description

### BACKGROUND

### Technical Field

The disclosure relates to a control system, a support apparatus and a program applied to a factory automation (FA) system arranged at a manufacturing site or the like.

### Related Art

In FA systems at many manufacturing sites, introduction of a safety system is progressing in order to use equipment and machines safely. The safety system is used for providing a safety function in accordance with international standards, and is configured by safety components such as a safety controller, a safety sensor, a safety switch, and a safety relay.

The safety system is also required to provide a safety function for a drive apparatus such as a servomotor that drives the equipment or the machines. In order to implement the safety function, a safety driver that controls the drive apparatus executes a safety program. At execution time, the safety program references a parameter group. The parameter group for implementing this safety function is provided by being downloaded to the safety driver.

For example, Non-Patent literature 1 proposes FSoE (Safety over EtherCAT) which is a mechanism for mixing safety control data related to a safety system with data on an EtherCAT (registered trademark) (EtherCAT: Ethernet (registered trademark) for Control Automation Technology) communication path.

### [Literature of related art]

### [Non-Patent literature]

[Non-Patent literature 1] "EtherCAT Protocol Enhancements, Amendments to ETG. 5100 FSoE specification, Document: ETG. 5120 S(R)V1.1.0", EtherCAT Technology Group, 2017-07-14

### SUMMARY

### [Problems to be Solved]

Non-Patent literature 1 discloses a mechanism for transferring (downloading), to FSoE slaves which are safety drivers, parameters of safty-related application parameter set (SRA) that the safety program references at the time of execution. When the SRA parameters are transferred to all the FSoE slaves connected to the system, a communication load, including the transfer time, increases in proportion to the number of the FSoE slaves.

One object of the disclosure is to provide a control system, a support apparatus and a program that reduce a load associated with transfer of parameters referenced by a safety program in a control system.

### [Means to Solve Problems]

The control system according to an example of the disclosure includes: a first controller; and a drive apparatus for driving a motor in accordance with a first instruction from the first controller. The drive apparatus includes a memory that stores a safety program for implementing a safety function relating to the drive of the motor, and a parameter group referenced at the time of the execution of the safety program. The control system further includes: a second controller that transmits a second instruction related to work of the safety function to the drive apparatus; a network for sharing data with each other between the first controller, the drive apparatus, and the second controller; and a support apparatus capable of being connected to the network. The support apparatus includes a parameter generation portion that generates the parameter group in accordance with a user operation on this support apparatus, and a size reduction portion that reduces a size of the generated parameter group in a way capable of restoring the parameter group by the drive apparatus when the generated parameter group is transferred via the network.

According to the disclosure, when the parameter group generated by the support apparatus is transferred to the drive apparatus, the parameter group is transferred after the size reduction. Thus, the load associated with the transfer of the parameter group to the drive apparatus can be reduced,

In the above disclosure, the parameter generation portion generates a change parameter group changed in accordance with the user operation from an initial parameter group; and the size reduction portion generates, as the reduced-size parameter group, a difference parameter group indicating a difference between the change parameter group and the initial parameter group.

According to the disclosure, the size reduction of the parameter group can be carried out by generating the difference parameter group indicating the difference between the initial parameter group used for the generation and the generated parameter group.

In the above disclosure, the memory of the drive apparatus has a region for holding the initial parameter group; and the drive apparatus restores the change parameter group by changing the initial parameter group held in the memory using the difference parameter group received via the network.

According to the disclosure, the drive apparatus can restore the generated parameter group (that is, the change parameter group) by using the held initial parameter group and the difference parameter group received from the support apparatus.

In the above disclosure, the parameter generation portion generates a change parameter group changed in accordance with the user operation from an initial parameter group; and the size reduction portion generates a compressed change parameter group as the reduced-size parameter group.

According to the disclosure, the size reduction of the parameter group can be carried out by compressing the generated parameter group.

In the above disclosure, the drive apparatus restores the change parameter group by decompressing the compressed change parameter group received via the network.

According to the disclosure, the drive apparatus can restore the generated parameter group (that is, the change parameter group) by decompressing the compressed parameter group received via the network.

In the above disclosure, the drive apparatus restores the change parameter group by decompressing, in accordance with a command received via the network, the compressed change parameter group received via the network.

According to the disclosure, the drive apparatus can restore the generated parameter group (that is, the change parameter group) by receiving the command and the compressed parameter group via the network and decompressing the compressed parameters in accordance with the received command.

In the above disclosure, the second instruction is transmitted via a connection formed using the network between the second controller and the drive apparatus. The support apparatus includes a first calculation portion that calculates, from the change parameter group, first data indicating validity of this change parameter group in accordance with a predetermined formula, and the support apparatus transfers the calculated first data to the second controller. The drive apparatus includes a second calculation portion that calculates, from the restored change parameter group, second data indicating validity of this restored change parameter group in accordance with the predetermined formula, and notifies establishment of the connection to the second controller when comparison of the first data received from the second controller and the calculated second data indicates a match.

According to the disclosure, when a value indicating the validity calculated from the change parameter group restored by the drive apparatus and a value indicating the validity calculated from the change parameter group generated by the support apparatus match, the connection can be established between the drive apparatus and the second controller.

The support apparatus according to an example of the disclosure is connected to a control system. The control system includes: a first controller, and a drive apparatus for driving a motor in accordance with a first instruction from the first controller. The drive apparatus includes a memory that stores a safety program for implementing a safety function relating to the drive of the motor, and a parameter group referenced at the time of the execution of the safety program. The control system further includes: a second controller that transmits a second instruction related to work of the safety function to the drive apparatus, and a network for sharing data with each other between the first controller, the drive apparatus, and the second controller. The support apparatus includes: a parameter generation portion that generates the parameter group in accordance with a user operation on this support apparatus, and a size reduction portion that reduces a size of the generated parameter group in a way capable of restoring the parameter group by the drive apparatus when the generated parameter group is transferred via the network.

According to the disclosure, when the parameter group generated by the support apparatus is transferred via the network, the parameter group is transferred after the size reduction. Thus, the load associated with the transfer of the parameter group to the drive apparatus can be reduced.

The program according to an example of the disclosure is a program executed by an information processing apparatus connected to a control system. The control system includes: a first controller, and a drive apparatus for driving a motor in accordance with a first instruction from the first controller. The drive apparatus includes a memory that stores a safety program for implementing a safety function relating to the drive of the motor, and a parameter group referenced at the time of the execution of the safety program. The control system further includes: a second controller that transmits a second instruction related to work of the safety function to the drive apparatus, and a network for sharing data with each other between the first controller, the drive apparatus, and the second controller. The program causes a processor of the information processing apparatus to execute a step of generating the parameter group in accordance with a user operation on the information processing apparatus, and a step of reducing a size of this parameter group in a way capable of restoring the parameter group by the drive apparatus when the generated parameter group is transferred via the network.

According to the disclosure, when the parameter group is transferred by executing the program, the parameter group is transferred after the size reduction. Thus, the load associated with the transfer of the parameter group to the drive apparatus can be reduced.

### [Effect]

According to an example of the disclosure, the load associated with the transfer of the parameters referenced by the safety program in the control system can be reduced.

### BRIEF DESCRIPTION OF THE DRAWINGS

FIG. 1 is a schematic diagram showing an example of an application scene of a control system 1 according to the embodiment.
FIG. 2 is a schematic diagram showing a configuration example of the control system 1 according to the embodiment.
FIG. 3 is a schematic diagram showing a hardware configuration example of a standard controller 100 configuring the control system 1 according to the embodiment.
FIG. 4 is a schematic diagram showing a hardware configuration example of a safety controller 200 configuring the control system 1 according to the embodiment.
FIG. 5 is a schematic diagram showing a hardware configuration example of a safety driver 300 and a servomotor 400 configuring the control system 1 according to the embodiment.
FIG. 6 is a schematic diagram showing a hardware configuration example of a support apparatus 500 configuring the control system 1 according to the embodiment.
FIG. 7 is a diagram illustrating a transmission mode of a communication frame in the control system 1 according to the embodiment.
FIG. 8 is a schematic diagram showing an example of function sharing during running of the control system 1 according to the embodiment.
FIG. 9 is a schematic diagram showing an implementation example of standard control, safety control, and parameter group transfer in the control system 1 according to the embodiment.
FIG. 10 is a schematic diagram showing an example of a transfer flow of a reduced-size parameter group in the control system 1 according to the embodiment.
FIG. 11 is a schematic diagram showing an example of a transfer sequence of the reduced-size parameter group in the control system 1 according to the embodiment.
FIG. 12 is a diagram illustrating a way of deriving a difference parameter group according to the embodiment.
FIG. 13 is a schematic diagram showing another example of the transfer flow of the reduced-size parameter group in the control system 1 according to the embodiment.
FIG. 14 is a schematic diagram showing another example of the transfer sequence of the reduced-size parameter group in the control system 1 according to the embodiment.

### DESCRIPTION OF THE EMBODIMENTS

An embodiment of the present invention is described in detail with reference to the drawings. Moreover, the same or corresponding parts in the drawings are designated by the same reference signs and description thereof is not be repeated.

### <A. Application example>

First, an example of a scene in which the present invention is applied is described.

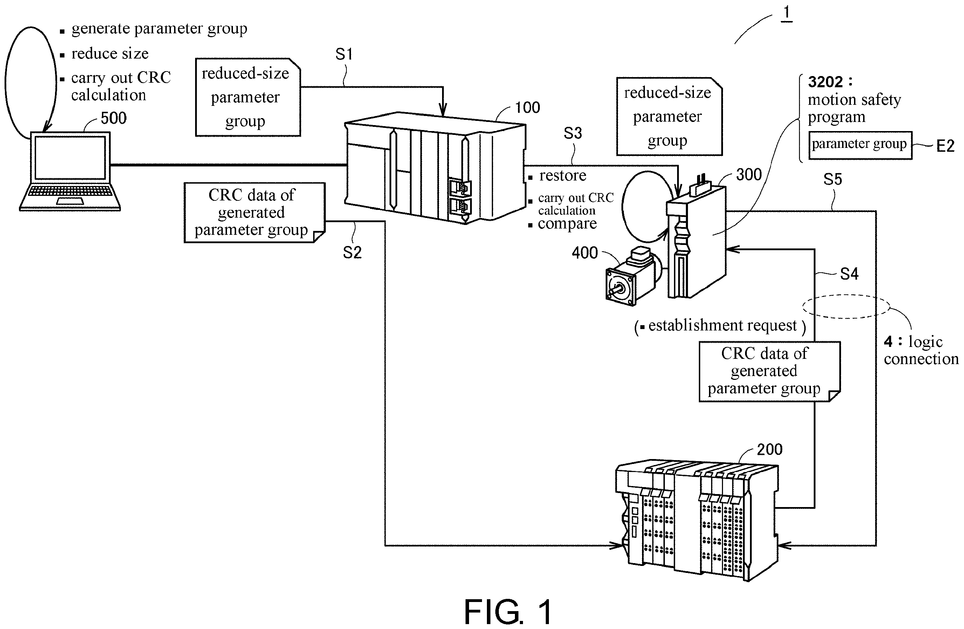

FIG. 1 is a schematic diagram showing an example of an application scene of a control system 1 according to the embodiment. The control system 1 according to the embodiment provides, for example, a safety function for a drive apparatus and a function for transferring (downloading), to a safety driver, SRA parameters defined in an ETG standard determined in Non-Patent literature 1 described above.

With reference to FIG. 1, the control system 1 mainly includes a standard controller 100, and a safety controller 200 and one or more safety drivers 300 connected to the standard controller 100 via a field network. Each of the safety drivers 300 is an example of a drive apparatus and drives an electrically connected servomotor 400. Moreover, not limited to the servomotor 400, any kind of actuator (for example, a three-phase AC motor, a DC motor, a single-phase AC motor, a multi-phase AC motor, a linear servo, or the like) can be employed. In addition, the substance of the safety driver 300 may be a servo driver or a general-purpose inverter apparatus. In the following description, the safety driver 300 is described as an example of the drive apparatus.

The standard controller 100 corresponds to a first controller and executes standard control for an object to be controlled including the servomotor 400 according to a standard control program created in advance. Typically, the standard controller 100 cyclically executes a control calculation according to an input signal from one or more sensors (not shown) or the like, thereby periodically calculating an instruction (first instruction) to the actuator such as the servomotor 400 or the like.

The safety controller 200 transmits a safety instruction (second instruction) related to the work of the safety function to the safety driver 300. More specifically, independently of the standard controller 100, the safety controller 200 cyclically executes monitoring and control calculations for implementing the safety function for the object to be controlled. The safety controller 200 can receive an input signal from an arbitrary safety device 240 described later, and/or output an instruction to the arbitrary safety device 240.

In the specification, terms including "standard control" mainly carried by the standard controller 100 and "safety control" carried by the safety controller 200 or the safety driver 300 are used in contrast. The "standard control" is a general term of processing for controlling the object to be controlled according to a predetermined requirement specification. On the other hand, the "safety control" is a general term of processing for preventing human safety from being threatened by equipment or machines. The "safety control" is designed to meet requirements for implementing a safety function determined in IEC 61508 and the like.

The safety driver 300 drives the servomotor 400 by supplying electric power to the servomotor 400 in accordance with the instruction (the first instruction) from the standard controller 100. The safety driver 300 periodically calculates a rotation position, a rotation speed, a rotation acceleration, a generated torque, and the like of the servomotor 400 based on a feedback signal from the servomotor 400 and the like.

Furthermore, the safety driver 300 provides the safety controller 200 with state information necessary for the safety function, and executes a motion safety program 3202 according to the required safety function to adjust or shut off the electric power supplied to the servomotor 400 and monitor or adjust a position and a speed of a control shaft of the servomotor 400. At the time of the execution, the motion safety program 3202 adjusts or shuts off this electric power by with reference to the parameter group stored in a region E2, and also monitors and adjusts this electric power. The parameter group includes one or more SRA parameters that indicate values for motion safety (a position, a speed, a range, and the like).

The servomotor 400 has a motor rotated by receiving the electric power from the safety driver 300 and outputs, to the safety driver 300, a detection signal from an encoder coupled to a rotation shaft of the motor as the feedback signal.

By executing the motion safety program 3202, the safety driver 300 compares the values of the parameter group in the region E2 with the feedback from the encoder of the servomotor 400, and thereby monitoring that the servomotor 400 is normally controlled. As long as the safety driver 300 controls normally, normal work can be continued. When the safety driver 300 judges that the control on the servomotor 400 is incorrect, a stop signal from the safety driver 300 to the servomotor 400 is output. Thus, the parameter group in the region E2 which is a judgment reference for the safety driver 300 includes important parameters for the safety control. The parameter group may be changed by, for example, set-up change or the like.

The parameter group in the region E2 is transferred to the safety driver 300 via the field network from a support apparatus 500 connectable to the field network. The support apparatus 500 generates a parameter group in accordance with a user operation for this support apparatus, and when the generated parameter group is transferred to the safety driver 300, a size of this generated parameter group is reduced in a way capable of restoring the parameter group by the safety driver 300. Accordingly, the "reduced-size parameter group" is generated, and the "reduced-size parameter group" is transferred to the safety driver 300 via the field network (flows S1 and S3). Thereby, the "reduced-size parameter group" instead of the generated full-size parameter group is transferred to the safety driver 300, and thereby a communication load such as time or the like associated with the transfer can be reduced. In addition, because the time associated with the transfer of the parameter group can be shortened, time required for starting up the control system 1, such as time when a power source of a manufacturing apparatus is turned on, can be shortened.

When the safety driver 300 uses the "reduced-size parameter group", the safety driver 300 restores the original parameter group (that is, the parameter group generated by the support apparatus 500) from the "reduced-size parameter group" and stores the restored parameter group in the region E2.

In addition, the control system 1 provides a mechanism for detecting validity of the restored parameter group. Specifically, the safety driver 300 calculates cyclic redundancy check (CRC) data from the restored parameter group. In addition, the support apparatus 500 generates "CRC data of the generated parameter group" from the generated parameter group and transfers the "CRC data of the generated parameter group" to the safety controller 200 (flow S2). The safety controller 200 transmits the "CRC data of the generated parameter group" to the safety driver 300 together with an establishment request of a logic connection 4 to the safety driver 300. The safety driver 300 compares the CRC data of the restored parameter group with the "CRC data of the generated parameter group" received together with the establishment request.

When the comparison result shows that the two pieces of CRC data match with each other, the safety driver 300 establishes a logic connection to the safety controller 200 in response to the request, and executes the motion safety program 3202 with reference to the restored parameter group in the region E2. Accordingly, even if the parameter group may contain errors or alterations in the process of size reduction, the process of transfer, or the process of restoration, in the safety driver 300, the motion safety program 3202 is guaranteed to be executed with reference to the parameter group whose validity has been confirmed.

Hereinafter, as a more specific application example of the present invention, a more detailed configuration and more detailed processing of the control system 1 according to the embodiment are described.

### <B. Configuration example of control system 1>

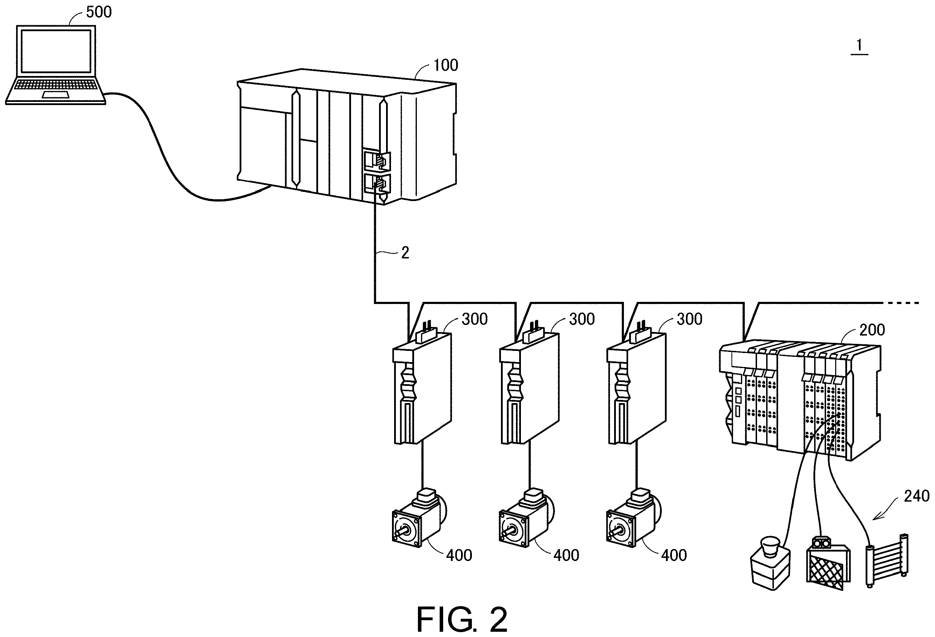

First, the configuration example of the control system 1 is described. FIG. 2 is a schematic diagram showing the configuration example of the control system 1 according to the embodiment.

### (b1: Overall configuration)

With reference to FIG. 2, the control system 1 mainly includes the standard controller 100, and the safety controller 200 and the one or more safety drivers 300 connected to the standard controller 100 via the field network. Each of the safety drivers 300 drives the electrically connected servomotor 400. Moreover, not limited to the servomotor 400, any kind of motor can be employed.

The standard controller 100 executes the standard control for the object to be controlled including the servomotor 400 according to the standard control program created in advance. Typically, the standard controller 100 cyclically executes the control calculation according to the input signal from the one or more sensors (not shown) or the like, thereby periodically calculating the instruction to the actuator such as the servomotor 400 or the like.

Independently of the standard controller 100, the safety controller 200 cyclically executes the monitoring and the control calculations for implementing the safety function for the object to be controlled. The safety controller 200 can receive an input signal from any safety device 240, and/or output an instruction to the arbitrary safety device 240.

The safety driver 300 drives the servomotor 400 by supplying the electric power to the servomotor 400 in accordance with the instruction from the standard controller 100. The safety driver 300 periodically calculates the rotation position, the rotation speed, the rotation acceleration, the generated torque, and the like of the servomotor 400 based on the feedback signal from the servomotor 400 and the like.

The safety driver 300 provides the safety controller 200 with the state information necessary for the safety function, and adjusts or shuts off the electric power supplied to the servomotor 400 according to the required safety function.

The servomotor 400 has the motor rotated by receiving the electric power from the safety driver 300 and outputs, to the safety driver 300, the detection signal from the encoder coupled to the rotation shaft of the motor as the feedback signal.

### (b2: Standard controller 100)

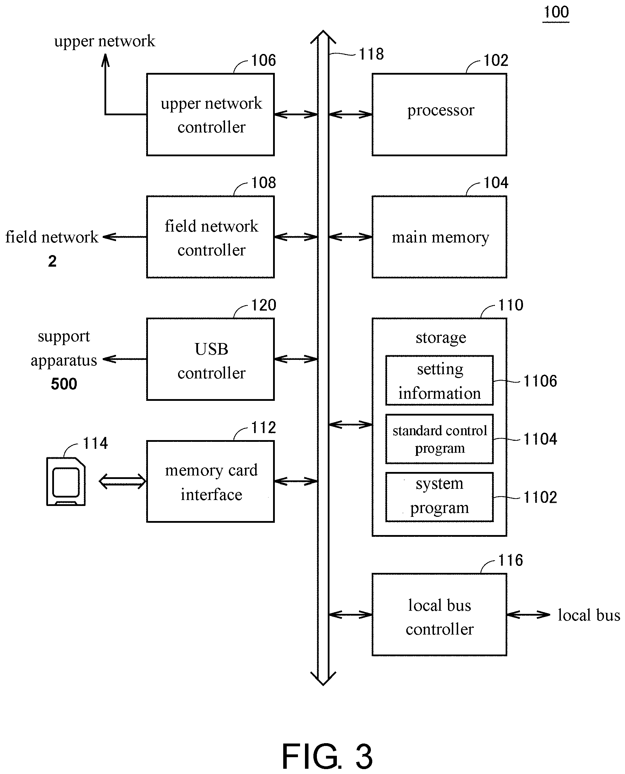

FIG. 3 is a schematic diagram showing a hardware configuration example of the standard controller 100 configuring the control system 1 according to the embodiment. With reference to FIG. 3, the standard controller 100 includes a processor 102, a main memory 104, a storage 110, an upper network controller 106, a field network controller 108, a universal serial bus (USB) controller 120, a memory card interface 112, and a local bus controller 116. These components are connected via a processor bus 118.

The processor 102 corresponds to a calculation processing portion that mainly executes the control calculations related to the standard control, and is configured by a central processing unit (CPU), a graphics processing unit (GPU), and the like. Specifically, the processor 102 reads programs stored in the storage 110 (for example, a system program 1102 and a standard control program 1104), expands these programs into the main memory 104, and executes these programs, thereby implementing the control calculation according to the object to be controlled and various processes as described later.

The main memory 104 is configured by a volatile storage apparatus such as a dynamic random access memory (DRAM), a static random access memory (SRAM), or the like. The storage 110 is configured by, for example, a non-volatile storage apparatus such as a solid state drive (SSD), a hard disk drive (HDD), or the like.

In the storage 110, in addition to the system program 1102 for implementing basic functions, the standard control program 1104 created according to the object to be controlled is stored. In addition, the storage 110 stores setting information 1106 for setting various variables.

The upper network controller 106 exchanges data with any information processing apparatus via the upper network.

The field network controller 108 exchanges data with any device including the safety controller 200 and the safety driver 300 via the field network 2. In the control system 1 shown in FIG. 3, the field network controller 108 of the standard controller 100 functions as a communication master of a field network 2.

The USB controller 120 exchanges data with the support apparatus 500 and the like via a USB connection.

The memory card interface 112 receives a memory card 114, which is an example of a removable recording medium. The memory card interface 112 can write data to the memory card 114 and read various data (logs, trace data, and the like) from the memory card 114.

The local bus controller 116 exchanges data with any unit connected to the standard controller 100 via a local bus.

In FIG. 2, the support apparatus 500 is arranged independently of the standard controller 100, but a configuration in which functions of a display apparatus, the support apparatus 500, and the like are integrated with the standard controller 100 may be employed. FIG 3 shows a configuration example in which necessary functions are provided in a manner that the processor 102 executes the programs. However, some or all of these functions provided may be implemented using a dedicated hardware circuit (for example, an application specific integrated circuit (ASIC), a field-programmable gate array (FPGA), or the like). Alternatively, a main part of the standard controller 100 may be implemented using hardware that follows a general-purpose architecture (for example, an industrial personal computer based on a general-purpose personal computer). In this case, virtualization technology may be used to execute a plurality of operating systems (OSs) for different purposes in parallel, and to execute necessary applications on each OS. Furthermore, a configuration may be employed in which the functions of the display apparatus, the support apparatus, and the like are integrated into the standard controller 100.

### (b3: Safety controller 200)

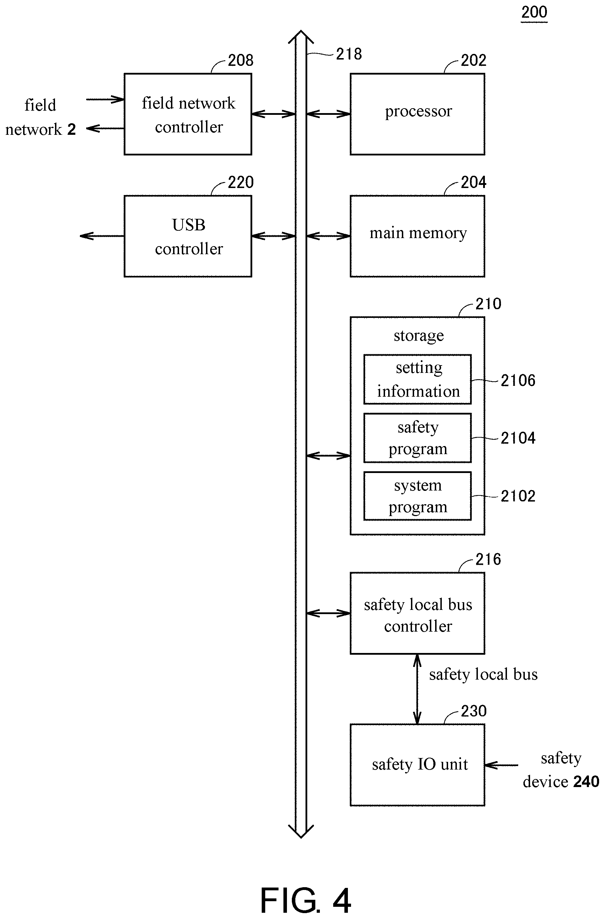

FIG. 4 is a schematic diagram showing a hardware configuration example of the safety controller 200 configuring the control system 1 according to the embodiment. With reference to FIG. 4, the safety controller 200 includes a processor 202, a main memory 204, a storage 210, a field network controller 208, a USB controller 220, and a safety local bus controller 216. These components are connected via a processor bus 218.

The processor 202 corresponds to a calculation processing portion that mainly executes the control calculations related to the safety control, and is configured by a CPU, a GPU, and the like. Specifically, the processor 202 reads programs stored in the storage 210 (for example, a system program 2102 and a safety program 2104), expands these programs into the main memory 204, and executes these programs, thereby implementing the control calculation for providing the necessary safety functions and various processes as described later.

The main memory 204 is configured by a volatile storage apparatus such as a DRAM, a SRAM, or the like. The storage 210 is configured by, for example, a non-volatile storage apparatus such as a SSD, a HDD, or the like.

In the storage 210, in addition to the system program 2102 for implementing basic functions, the safety program 2104 created according to the required safety functions is stored. Furthermore, the storage 210 stores setting information 2106 for setting variables and the like.

The field network controller 208 exchanges data with any device including the standard controller 100 and the safety driver 300 via the field network 2. In the control system 1 shown in FIG. 3, the field network controller 208 of the safety controller 200 functions as a communication slave of the field network 2.

The USB controller 220 exchanges data with the information processing apparatus such as the support apparatus 500 and the like via a USB connection.

The safety local bus controller 216 exchanges data with any safety unit connected to the safety controller 200 via a safety local bus. FIG. 4 shows a safety IO unit 230 as an example of the safety unit.

The safety IO unit 230 exchanges input/output signals with any safety device 240. More specifically, the safety IO unit 230 receives an input signal from a safety device 240 such as a safety sensor, a safety switch, or the like. Alternatively, the safety IO unit 230 outputs an instruction to a safety device 240 such as a safety relay, or the like.

FIG. 4 shows a configuration example in which necessary functions are provided in a manner that the processor 202 executes the programs. However, some or all of these functions provided may be implemented using a dedicated hardware circuit (for example, an ASIC, a FPGA, or the like). Alternatively, a main part of the safety controller 200 may be implemented using hardware that follows a general-purpose architecture (for example, an industrial personal computer based on a general-purpose personal computer).

### (b4: Safety driver 300 and servomotor 400)

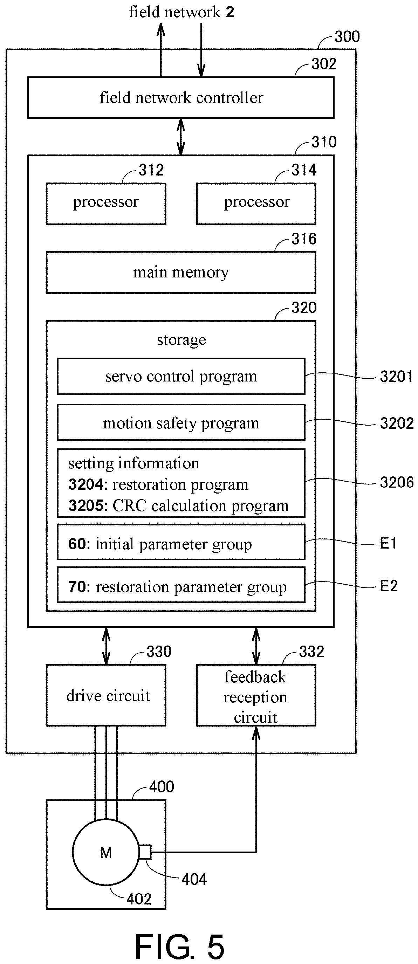

FIG. 5 is a schematic diagram showing a hardware configuration example of the safety driver 300 and the servomotor 400 configuring the control system 1 according to the embodiment. With reference to FIG. 5, the safety driver 300 includes a field network controller 302, a control portion 310, a drive circuit 330, and a feedback reception circuit 332.

The field network controller 302 exchanges data with any device, including the standard controller 100 and the safety controller 200, via the field network 2. In the control system 1 shown in FIG. 5, the field network controller 302 of the safety driver 300 functions as a communication slave of the field network 2.

The control portion 310 executes calculation processing necessary for causing the safety driver 300 to work. For example, the control portion 310 includes processors 312 and 314, a main memory 316, and a storage 320.

The processor 312 corresponds to a calculation processing portion that mainly executes control calculation for driving the servomotor 400. The processor 314 corresponds to a calculation processing portion that mainly executes control calculation for providing the safety function related to the servomotor 400. The processors 312 and 314 are both configured by CPUs or the like.

The main memory 316 is configured by a volatile storage apparatus such as a DRAM, a SRAM, or the like. The storage 320 is configured by, for example, a non-volatile storage apparatus such as a SSD, a HDD, or the like.

The storage 320 stores a servo control program 3201 for implementing servo control related to the servomotor 400, the motion safety program 3202 for implementing the motion safety function related to the servomotor 400, and setting information 3206 for setting variables and the like exposed to other devices. The storage 320 further includes a region E1 for holding (storing) an initial parameter group 60 indicating initial values of the SRA parameters and the region E2 for storing a restoration parameter group 70. The restoration parameter group 70 shows a parameter group generated by restoring a parameter group after change whose size has been reduced to an original parameter group after change.

The setting information 3206 includes a restoration program 3204 executed by the processor 314 and a CRC calculation program 3205 that calculates cyclic redundancy check (CRC) data. When the restoration program 3204 is executed, the processing of restoring the reduced-size change parameter group is carried out, and the restoration parameter group 70 obtained by the restoration is stored in the region E2. In the embodiment, the "restoration" includes processing of returning the reduced-size change parameter group to the original size without damaging the contents of this change parameter group. In addition, in the embodiment, the "contents of the parameter group" include the number of parameters, an identifier (name) of each parameter, a data type, a data length, values (numerical value, logic value, etc.), and the like. The CRC calculation program 3205 calculates CRC data (value) for error detection from the restoration parameter group 70 in the region E2 in accordance with a predetermined calculation formula. The CRC data is a value for detecting validity of the restoration parameter group 70, such as that the restoration parameter group 70 has no error (or alteration), and the CRC data may include, for example, a checksum calculated from binary data of the restoration parameter group 70, or the like. Moreover, the CRC data is not limited to the checksum.

FIG. 5 exemplifies a configuration in which the two processors 312 and 314 execute the control calculations for different purposes to improve reliability, but the configuration is not limited hereto, and any configuration may be employed as long as the required safety function can be implemented. For example, when a plurality of cores are contained in a single processor, the control calculations respectively corresponding to the processors 312 and 314 may be executed. In addition, FIG. 5 shows a configuration example in which the necessary functions are provided in a manner that the processors 312 and 314 executes the program. However, some or all of these functions provided may be implemented using a dedicated hardware circuit (for example, ASIC, FPGA, or the like).

The drive circuit 330 includes a converter circuit, an inverter circuit, and the like, generates electric power having a specified voltage, current, and phase according to an instruction from the control portion 310, and supplies the electric power to the servomotor 400.

The feedback reception circuit 332 receives the feedback signal from the servomotor 400 and outputs the reception result to the control portion 310.

The servomotor 400 typically includes a three-phase AC motor 402 and an encoder 404 mounted on a rotation shaft of the three-phase AC motor 402.

The three-phase AC motor 402 is an actuator that receives the electric power supplied from the safety driver 300 to generate a rotation force. FIG. 5 exemplifies a three-phase AC motor as an example, but the present invention is not limited hereto, and a DC motor, a single-phase AC motor, or a multi-phase AC motor may be used. Furthermore, an actuator that generates a driving force along a straight line such as a linear servo may be employed.

The encoder 404 outputs a feedback signal (typically, a number of pulse signals corresponding to the rotation speed) corresponding to the rotation speed of the three-phase AC motor 402.

### (b5: Support apparatus 500)

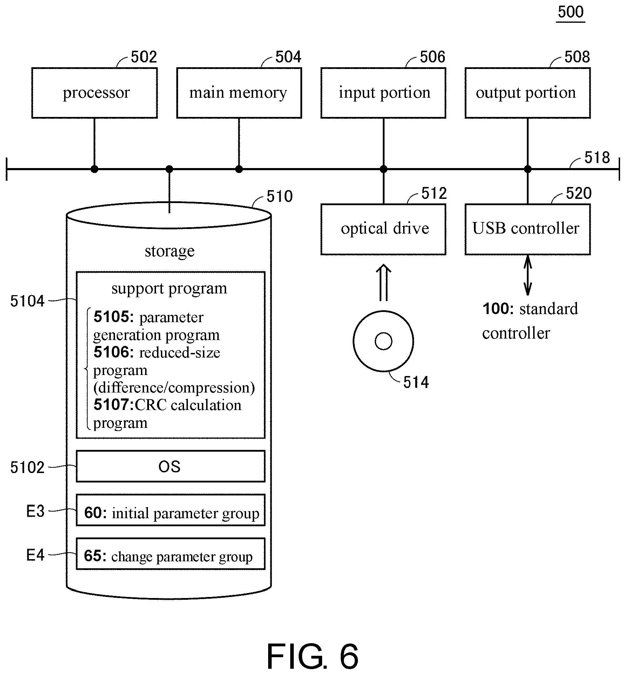

FIG. 6 is a schematic diagram showing a hardware configuration example of the support apparatus 500 configuring the control system 1 according to the embodiment. For example, the support apparatus 500 is implemented using hardware (for example, a general-purpose personal computer) that follows a general-purpose architecture.

With reference to FIG. 6, the support apparatus 500 includes a processor 502, a main memory 504, an input portion 506, an output portion 508, a storage 510, an optical drive 512, and a USB controller 520, which is an example of a communication interface. These components are connected via a processor bus 518.

The processor 502 is configured by a CPU, a GPU, and the like, reads a program stored in the storage 510, expands the program in the main memory 504, and executes the program, thereby implementing various processes as described later.

The main memory 504 is configured by a volatile storage apparatus such as a DRAM, a SRAM, or the like. The storage 510 is configured by, for example, a non-volatile storage apparatus such as a HDD, a SSD, or the like.

In the storage 510, in addition to an OS 5102 for implementing the basic functions, a support program 5104 for providing the function as the support apparatus 500 is stored. That is, the support program 5104 is executed by the processor of the information processing apparatus connected to the control system 1, and thereby the support apparatus 500 according to the embodiment is implemented.

The storage 510 includes a region E3 for holding (storing) the initial parameter group 60 and a region E4 for storing a change parameter group 65. The support program 5104 is executed so as to provide various development environments (tools and the like). The support program 5104 includes a parameter generation program 5105, a size reduction program 5106, and a CRC calculation program 5107 that provide the tools for generating the parameter group. The parameter generation program 5105 generates the change parameter group 65 by changing the contents of the initial parameter group 60 in accordance with the user operation received via the input portion 506. The generated change parameter group 65 is stored in the region E4.

The size reduction program 5106 provides a tool for generating, from the change parameter group 65 in the region E4, a parameter group having a size smaller than a data size of this change parameter group 65. Furthermore, when the size reduction program 5106 reduces the size of the change parameter group 65, the size reduction is carried out in order that the change parameter group 65 can be restored by the restoration program 3204 of the safety driver 300.

The CRC calculation program 510 calculates CRC data (value) for error detection from the initial parameter group 60 in the region E3 or the change parameter group 65 in the region E4 in accordance with a predetermined calculation formula. The CRC data is a value for detecting validity of this parameter group, such as that the initial parameter group 60 or the change parameter group 65 has no error (or alteration). Moreover, the predetermined calculation formula applied to the CRC calculation program 5107 match the calculation formula applied to the CRC calculation program 3205 of the safety driver 300.

The input portion 506 is configured by a keyboard, a mouse, and the like, and receives the user operation on the support apparatus 500. The output portion 508 is configured by a display, various indicators, a printer, and the like, and outputs a processing result from the processor 502 and the like.

The USB controller 520 can be connected to the field network 2, and exchanges data with, for example, the standard controller 100 and the like via the USB connection.

The support apparatus 500 has the optical drive 512, and from a recording medium 514 (for example, an optical recording medium such as a digital versatile disc (DVD) or the like) that non-transiently stores a computer-readable program, a program stored in the recording medium 514 is read and installed in the storage 510 or the like.

The support program 5104 or the like executed by the support apparatus 500 may be installed via the computer-readable recording medium 514, or may be installed in a form of being downloaded from a server apparatus or the like on the network. In addition, the functions provided by the support apparatus 500 according to the embodiment may also be implemented in a form of using a part of modules provided by the OS.

FIG. 6 shows a configuration example in which necessary functions are provided to form the support apparatus 500 in a manner that the processor 502 executes the programs. However, some or all of these functions provided may be implemented using a dedicated hardware circuit (for example, an ASIC, a FPGA, or the like).

Moreover, the support apparatus 500 may be removed from the standard controller 100 during running of the control system 1.

### <C. Data communication of control system 1>

Next, an example of data communication in the control system 1 is described.

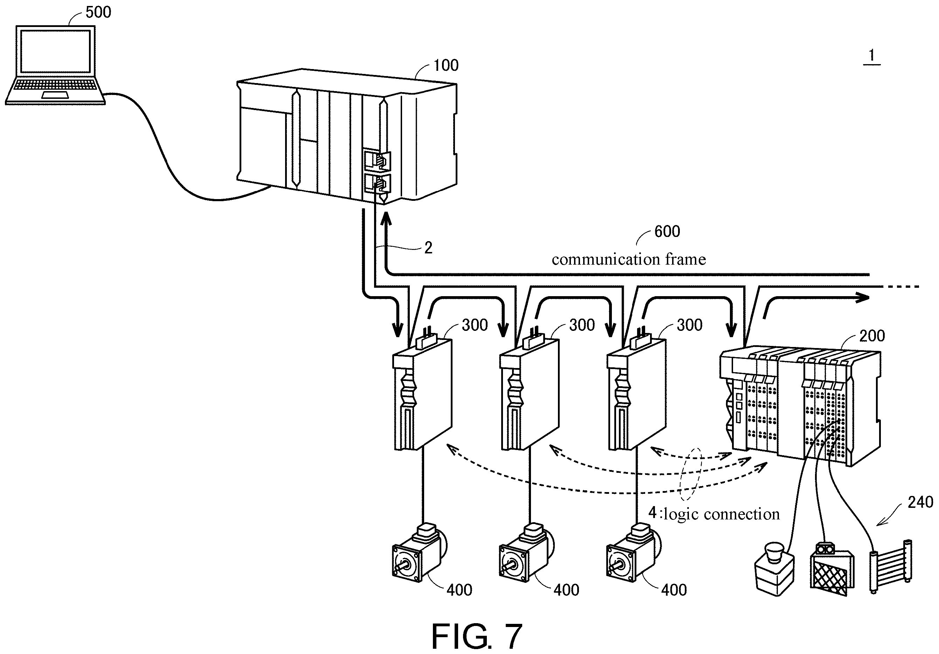

FIG. 7 is a diagram for illustrating a transmission mode of a communication frame in the control system 1 according to the embodiment. With reference to FIG. 7, data communication is performed in the field network 2 of the control system 1, and the communication frame 600 cyclically (for example, several to tens of msec) goes round the devices by using the standard controller 100 as the communication master. A period at which the communication frame 600 is transmitted is also referred to as a process data communication period.

In the embodiment, EtherCAT (registered trademark) is employed as an example of a protocol of the field network 2 for cyclically transmitting this communication frame 600.

A data region is allocated to the communication frame 600 for each device. When each device receives the communication frame 600, each device writes a current value of the preset data in the data region allocated to the device in this received communication frame 600. Then, the communication frame 600 after writing the current value is sent to the next device. The current value of the data written by each device can be referenced from other devices.

Each device writes the current value of the preset data in the communication frame 600, and thereby, the latest value collected by each device is included in the communication frame 600 which goes around the field network 2 and returns to the communication master (the standard controller 100).

In the embodiment, furthermore, this data communication is used, and the logic connection 4 is formed between each of the safety controller 200 and the safety driver 300 (see FIG. 7). The logic connection 4 is used for exchanging data to implement the safety functions.

As described above, when the EtherCAT is employed as the protocol of the field network 2, the logic connection 4 can be formed using a FSoE protocol.

### <D. Function sharing of control system 1>

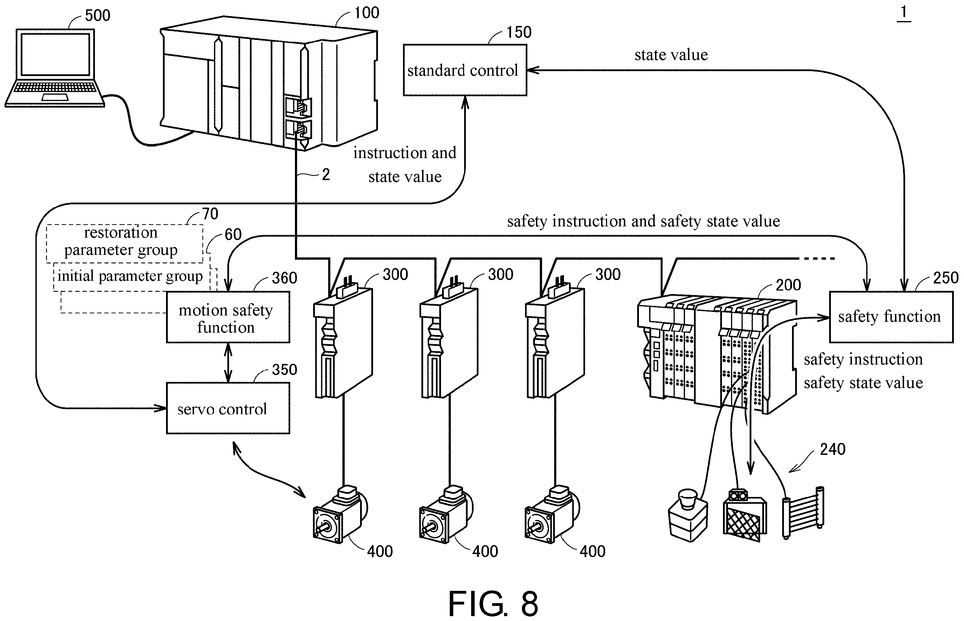

Next, an example of function sharing during the running in the control system 1 is described. FIG. 8 is a schematic diagram showing an example of the function sharing during the running of the control system 1 according to the embodiment.

With reference to FIG. 8, the safety driver 300 executes a servo control 350 with respect to a standard control 150 executed by the standard controller 100. The standard control 150 includes processing of periodically calculating an instruction for driving the servomotor 400 according to a user program preset for the object to be controlled. In addition, the servo control 350 includes control for driving the servomotor 400 according to an instruction periodically calculated by the standard control 150, and processing of acquiring and outputting a state value indicating a work state of the servomotor 400. The servo control 350 is handled by the processor 312 (see FIG. 5) of the safety driver 300.

On the other hand, the safety driver 300 provides a motion safety function 360 in response to a safety function 250 provided by the safety controller 200. The motion safety function 360 is handled by processor 314 (see FIG. 5) of the safety driver 300.

When predetermined conditions are met based on a state value held by the standard control 150 executed by the standard controller 100, a state value indicated by the signal from the safety device 240, a state value held by the safety driver 300, and the like, the safety function 250 activates the safety function specified in advance.

Processing of activating the safety function specified in advance includes, for example, the output of the safety instruction to the safety driver 300, the output of the safety instruction to the safety device 240 (for example, shutting off safety relay related to the electric power supply to a predetermined apparatus), or the like.

When the motion safety program 3202 is executed, the safety driver 300 provides the specified motion safety function 360 in response to the safety instruction from the safety controller 200. Depending on the type of the specified motion safety function 360, with intervention of the control on the servomotor 400 by the servo control 350 which the servo control program 3201 carries out, processing of shutting off the electric power supply to the servomotor 400, processing of monitoring whether the state value of the control on the servomotor 400 by the servo control 350 is within a predetermined limit range, or other processing is executed. The motion safety program 3202 references the SRA parameters indicated by the initial parameter group 60 in the region E1 or the restoration parameter group 70 in the region E2 to shut off the supply of the electric power or carry out the processing of monitoring.

### <E. Implementation example of standard control, safety control, and SRA parameter transfer>

As described above, in the control system 1 according to the embodiment, the data communication and the safety communication by the logic connection 4 are possible. Next, implementation examples of the standard control, the safety control, and the SRA parameter transfer using each communication are described.

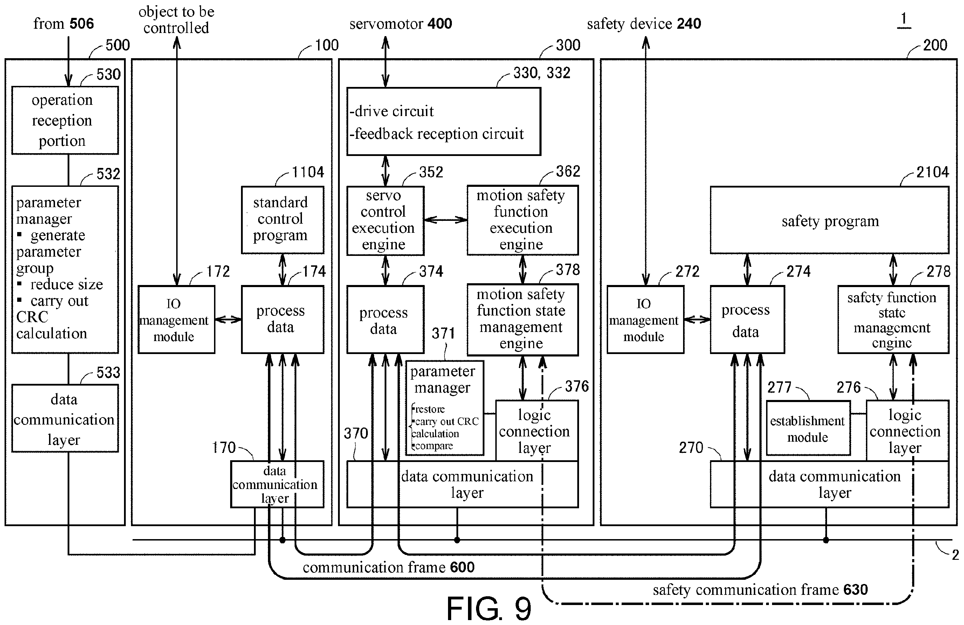

FIG. 9 is a schematic diagram showing an implementation example of the standard control, the safety control, and the parameter transfer in the control system 1 according to the embodiment. For convenience of description, FIG. 9 shows an example of the control system 1 including one safety driver 300 in addition to the standard controller 100, the safety controller 200 and the support apparatus 500.

With reference to FIG. 9, the standard controller 100 has, as main functional configurations, a data communication layer 170 and an IO management module 172. The safety controller 200 includes, as main functional configurations, a data communication layer 270, an IO management module 272, a logic connection layer 276, and a safety function state management engine 278. The safety driver 300 includes, as main functional configurations, a data communication layer 370, a logic connection layer 376, a motion safety function state management engine 378, a servo control execution engine 352, and a motion safety function execution engine 362. The safety driver 300 further includes a parameter manager 371 that manages various parameters including the SRA parameter group.

The data communication layer 170, the data communication layer 270, and the data communication layer 370 handle the transfer of the communication frame 600 on the field network 2.

The logic connection layer 276 of the safety controller 200 and the logic connection layer 376 of the safety driver 300 handle exchanging of a safety communication frame 630. That is, the logic connection layer 276 and the logic connection layer 376 use the safety communication frame 630 included in the communication frame 600 according to the protocol for establishing the logic connection (FSoE in the embodiment) to exchange the commands and the data. The safety controller 200 includes an establishment module 277 for establishing the logic connection 4 to the safety driver 300 via the logic connection layer 276.

In the standard controller 100, the IO management module 172 updates process data 174 by exchanging signals with the object to be controlled. The standard control program 1104 executed by the standard controller 100 executes the control calculation with reference to the process data 174, and updates the process data 174 with the execution result of the control calculation.

In the safety controller 200, the IO management module 272 updates process data 274 by exchanging signals with the safety device 240.

The safety program 2104 executed by the safety controller 200 executes the control calculation with reference to the process data 274 and the safety function state management engine 278, and updates the process data 274 or outputs an internal instruction to the safety function state management engine 278 based on the execution result of the control calculation.

The safety function state management engine 278 generates an instruction for activating a specific motion safety function for the specific safety driver 300 according to the execution result of the control calculation by the safety program 2104. In response to the instruction from the safety function state management engine 278, the logic connection layer 276 exchanges necessary commands and information with the logic connection layer 376 of the safety driver 300 which is the target by using the safety communication frame 630.

In the safety driver 300, the servo control execution engine 352 executes the control calculation related to the servo control with reference to process data 374 and the information of the feedback signal acquired via the feedback reception circuit 332. The servo control execution engine 352 updates the process data 374 and outputs an internal instruction to the drive circuit 330 based on the execution result of the control calculation. The drive circuit 330 drives the servomotor 400 according to the instruction from the servo control execution engine 352.

The motion safety function state management engine 378 manages a state of the motion safety function according to the safety instruction from the safety controller 200. The motion safety function state management engine 378 outputs an internal instruction to the motion safety function execution engine 362 in response to the instruction the safety controller 200.

In the motion safety function execution engine 362, the specified motion safety function is implemented by executing the motion safety program 3202.

The logic connection layer 376 exchanges the necessary commands and information with the logic connection layer 276 of the safety controller 200 by using the safety communication frame 630 in response to the instruction from the motion safety function state management engine 378. The parameter manager 371 the logic connection layer 376 implements a CRC data calculation function by executing the CRC calculation program 3205, and implements a function of comparing the calculated CRC data with the CRC data received from the safety controller 200. In addition, when the comparison result indicates that the two pieces of CRC data match with each other, the parameter manager 371 causes the logic connection layer 376 to transmit a response of establishing the logic connection 4 to the safety controller 200.

With reference to FIG. 9, the support apparatus 500 has, as main functional configurations, a data communication layer 533 and a parameter manager 532. The data communication layer 533 exchanges data with various apparatuses including the standard controller 100. By executing the parameter generation program 5105, the parameter manager 532 generates a parameter group in accordance with the user operation contents received by an operation reception portion 530 via the input portion 506. In addition, the parameter manager 532 reduces the size of the generated parameter group by executing the size reduction program 5106. The parameter manager 532 implements the function of transferring the reduced-size parameter group to the safety driver 300 which is the object via the field network 2.

### <F. Example of transfer of reduced-size parameter group>

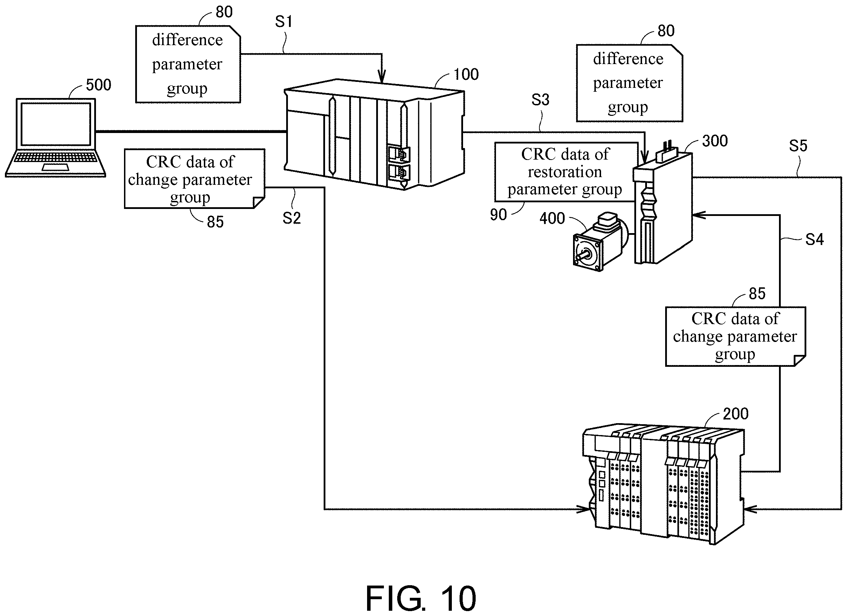

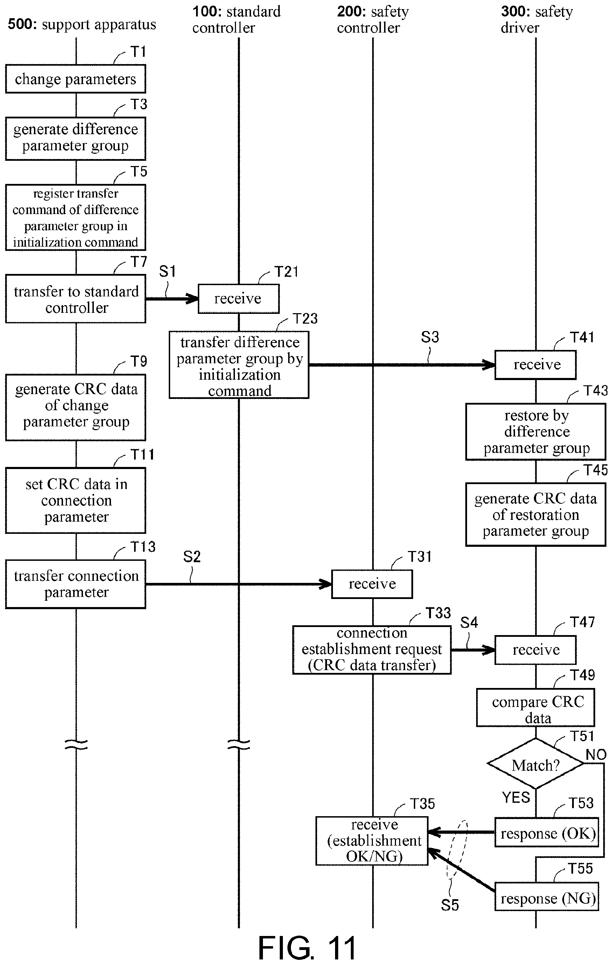

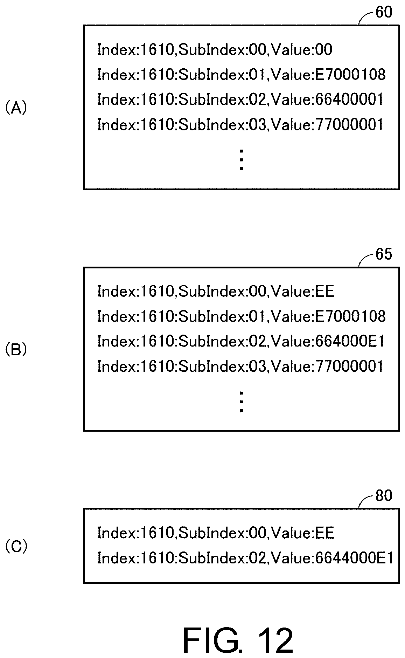

FIG. 10 is a schematic diagram showing an example of a transfer flow of the reduced-size parameter group in the control system 1 according to the embodiment. FIG. 11 is a schematic diagram showing an example of a transfer sequence of the reduced-size parameter group in the control system 1 according to the embodiment. FIG. 12 is a diagram illustrating a way of deriving a difference parameter group according to the embodiment. In the embodiment, for example, when the control system 1 is started, the SRA parameter group is transferred from the support apparatus 500 to each safety driver 300. The support apparatus 500 reduces the size of the generated parameter group, that is, the change parameter group 65 in the region E4, and transfers the reduced-size parameter group to each safety driver 300 via the field network 2.

In the embodiment, a difference parameter group 80 can be applied as the reduced-size parameter group. For example, when the change parameter group 65 in FIG. 12(B) is generated from the initial parameter group 60 in FIG. 12(A), the parameter manager 532 executes the size reduction program 5106, and thereby a difference between the change parameter group 65 and the initial parameter group 60 is extracted and the difference parameter group 80 in FIG. 12(C) indicating the difference is generated. The contents of the parameter group shown in FIG. 12 include, for each parameter, a storage location (a physical address or a logic address) indicated by Index and subIndex, an identifier (a name or the like) indicated by 00, 01, 02 or the like, and a value indicated by Value. As shown in the diagram, the data size of the difference parameter group 80 can be made smaller than the data size of the change parameter group 65 by the size reduction.

The sequence for transferring the difference parameter group 80 to each safety driver 300 is described with reference to FIGS. 10 and 11. Flows S1 to S5 in FIG. 11 correspond to flows S1 to S5 in FIG. 10. First, in the support apparatus 500, the parameter manager 532 executes the parameter generation program 5105, thereby changing the initial parameter group 60 in accordance with the user operation received by the operation reception portion 530. Thereby, the change parameter group 65 is generated (step T1 in FIG. 11). In addition, the parameter manager 532 executes the size reduction program 5106, and thereby the difference parameter group 80 as shown in FIG. 12 is generated (step T3). The parameter manager 532 sets the transfer command of the difference parameter group 80 in the EtherCAT initialization command of the safety driver 300 (slave) (step T5). The support apparatus 500 transfers the initialization command to the standard controller 100 together with the difference parameter group 80 (step T7).

In addition, the parameter manager 532 of the support apparatus 500 calculates CRC data 85 from the change parameter group 65 (step T9), sets the CRC data 85 in the connection parameter, and transmits this connection parameter to the safety controller 200 via the field network 2 (steps T11 and T13).

The standard controller 100 receives the difference parameter group 80 and the initialization command from the support apparatus 500 (step T21), and transfers the difference parameter group 80 to the safety driver 300 by executing the transfer command set in the initialization command to turn. (step T23).

The safety driver 300 receives the difference parameter group 80 from the standard controller 100 via the field network 2 (step T41). By executing the restoration program 3204, the parameter manager 371 changes the initial parameter group 60 read from the region E1 by using the received difference parameter group 80. Accordingly, the restoration parameter group 70 that restores the change parameter group is generated, and the restoration parameter group 70 is stored in the region E2 (step T43).

As a result, when the change parameter group 65 is transferred from the support apparatus 500 to each safety driver 300, the transfer can be completed by transferring the difference parameter group 80 instead of transferring all the parameters of the change parameter group 65, time related to the transfer can be shortened, and the load on the field network 2 can be reduced.

Furthermore, the parameter manager 371 of the safety driver 300 calculates CRC data 90 from the restoration parameter group 70 in the region E2 by executing the CRC calculation program 3205 (step T45).

In addition, when the establishment module 277 of the safety controller 200 establishes the logic connection 4 to the safety driver 300, a connection establishment request is transferred to the safety driver 300 together with the CRC data 85 set in the connection parameter received from the support apparatus 500 (steps T31 and T33).

When the parameter manager 371 of the safety driver 300 receives the connection establishment request from the safety controller 200 (step T47), the parameter manager 371 compares the CRC data 85 received together with the connection establishment request with the CRC data 90 generated in step T45 (step T49). When the safety driver 300 judges that the comparison result indicates a match (YES in step T51), the safety driver 300 receives the establishment request, generates an "OK" response and transmits the "OK" response to the safety controller 200 (step T53). Thereafter, the logic connection 4 is established between the safety driver 300 and the safety controller 200. In addition, when the safety driver 300 judges that the comparison result indicates a mismatch (NO in step T51), the safety driver 300 generates an "NG" response for rejecting the establishment request and transmits the "NG" response to the safety controller 200 (step T55). The establishment module 277 of the safety controller 200 receives the OK or NG response from the safety driver 300 in response to the establishment request (step T35).

The safety driver 300 can detect, by carrying out CRC code comparison, that there is an error, an alteration or the like in the size reduction process, the process of transferring the difference parameter group 80, or the process of restoration using the difference parameter group 80. In addition, when an error is detected, that is, when the validity of the restoration parameter group 70 cannot be guaranteed, the motion safety program 3202 can be executed with reference to the initial parameter group 60 instead of the restoration parameter group 70. Thereby, the motion safety program 3202 can be prevented from being executed with reference to a parameter group that may have an error.

### <G. Another example of transfer of reduced-size parameter group>

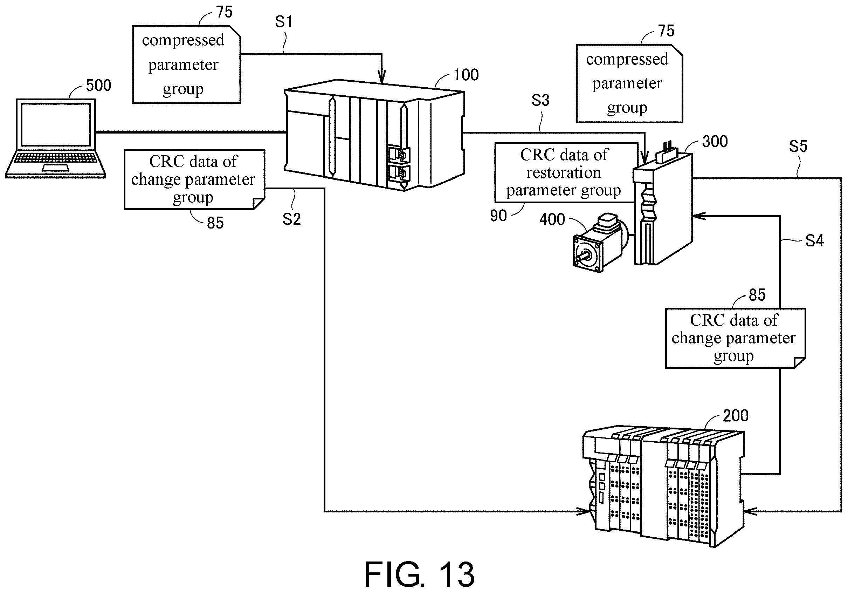

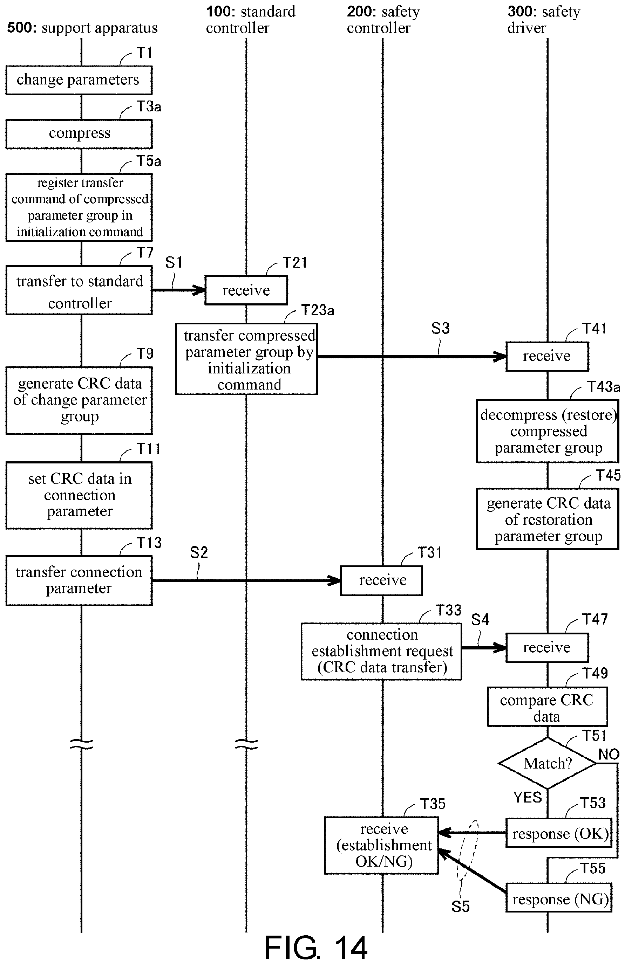

FIG. 13 is a schematic diagram showing another example of the transfer flow of the reduced-size parameter group in the control system 1 according to the embodiment. FIG. 14 is a schematic diagram showing another example of the transfer sequence of the reduced-size parameter group in the control system 1 according to the embodiment. In the above-mentioned example, the size reduction of the change parameter group 65 is implemented by generating the difference parameter group 80, but as another way of the size reduction, a way of compressing the change parameter group 65 may be used.

A sequence of transferring a compressed parameter group 75 is described with reference to FIGS. 13 and 14, and the compressed parameter group 75 is obtained by compressing the change parameter group 65 in order to transfer the change parameter group 65 to each safety driver 300. Flows S1 to S5 in FIG. 14 correspond to flows S1 to S5 in FIG. 13. First, the parameter manager 532 of the support apparatus 500 generates the change parameter group 65 by changing the initial parameter group 60 in accordance with the user operation received by the operation reception portion 530 (step T1 in FIG. 14), and stores the change parameter group 65 in the region E4. The parameter manager 532 compresses the change parameter group 65 read from the region E4 by a predetermined compression method by executing the size reduction program 5106, and generates the compressed parameter group 75 (step T3a). As the compression method, for example, ZIP can be employed. The support apparatus 500 sets a transfer command of the compressed parameter group 75 in the EtherCAT initialization command of the safety driver 300 (slave) (step T5a). The support apparatus 500 transfers the initialization command to the standard controller 100 together with the compressed parameter group 75 (step T7).

In addition, the parameter manager 532 of the support apparatus 500 calculates the CRC data 85 from the change parameter group 65 (step T9), sets CRC data 85 in the connection parameter (step T11), and transmits the connection parameters to the safety controller 200 via the field network 2 (step T13).

The standard controller 100 receives the compressed parameter group 75 together with the initialization command from the support apparatus 500 (step T21), and transfers the compressed parameter group 75 to the safety driver 300 by executing the transfer command set in the initialization command (step T23a).

The safety driver 300 receives the compressed parameter group 75 from the standard controller 100 (step T41), and the parameter manager 371 executes the restoration program 3204, thereby restoring the received compressed parameter group 75 according to a decompression (extension, expansion) method corresponding to the above-mentioned predetermined compression method, and generates the restoration parameter group 70. The generated restoration parameter group 70 is stored in the region E2 (step T43a).

Thereby, when the change parameter group 65 is transferred from the support apparatus 500 to each safety driver 300, the transfer can be completed by compressing and size-reducing the change parameter group 65, the time related to the transfer can be shortened, and the load on the field network 2 can be reduced.

Thereafter, the processes of steps T31 to T55 are executed between the support apparatus 500, the safety controller 200, and the safety driver 300. Because the processes of steps T31 to T55 in FIG. 14 are the same as those processes shown in FIG. 11, the description is not repeated.

Moreover, as the compression method, a method selected from a plurality of methods including the above ZIP can also be used. In this case, the parameter manager 532 of the support apparatus 500 transmits, to the safety driver 300, a command of specifying the decompression method corresponding to the selected compression method. The parameter manager 371 of the safety driver 300 decompresses the compressed parameter group 75 according to the decompression method specified by the command received from the safety driver 300.

In addition, the support apparatus 500 transmits the command of specifying the decompression method to the safety driver 300 via the field network 2. In addition, the command of specifying the decompression method may be transmitted to the safety driver 300 together with the compressed parameter group 75 transferred to the safety driver 300 or at a time different from the transfer of the compressed parameter group 75.

In addition, when the command of specifying the decompression method is transmitted together with the compressed parameter group 75, the specifying command may be included in a header of the compressed parameter group.

As still another example of the size reduction, a way of compressing the difference parameter group 80 may be employed. In addition, the difference parameter group 80 may indicate the difference between the binary data of the initial parameter group 60 and the change parameter group 65, and may indicate a difference between the CSV data when the parameter group follows the CSV format as shown in FIG. 12.

As described above, the difference parameter group 80 is transferred to the safety driver 300 through the standard controller 100 (FIG. 11), and the compressed parameter group 75 and the command of specifying the decompression method are transferred to the safety driver 300 through the standard controller 100 (FIG. 14), but the transferring route is not limited hereto. For example, the difference parameter group 80 may be transferred from the support apparatus 500 to the safety driver 300 without going through the standard controller 100, and the compressed parameter group 75 and the command of specifying the decompression method may also be transferred from the support apparatus 500 to the safety driver 300 without going through the standard controller 100.

### <H. Appendix>

The embodiment as described above includes the following technical ideas.
[Configuration 1]
   A control system (1), including: a first controller (100); and
   a drive apparatus (300) for driving a motor (400) in accordance with a first instruction from the first controller, wherein
   the drive apparatus includes a memory (320) that stores a safety program (3202) for implementing a safety function relating to the drive of the motor, and a parameter group (E2) referenced at the time of the execution of the safety program; and
   the control system further includes: a second controller (200) that transmits a second instruction related to work of the safety function to the drive apparatus;
   a network (2) for sharing data with each other between the first controller, the drive apparatus, and the second controller; and
   a support apparatus (500) capable of being connected to the network, wherein
   the support apparatus includes:
   a parameter generation portion (5105) that generates the parameter group in accordance with a user operation on this support apparatus, and
   a size reduction portion (5106) that reduces a size of the generated parameter group in a way capable of restoring the parameter group by the drive apparatus when the generated parameter group is transferred via the network.
[Configuration 2]
   The control system according to Configuration 1, wherein the parameter generation portion
   generates a change parameter group (65) changed in accordance with the user operation from an initial parameter group (60); and
   the size reduction portion
   generates, as the reduced-size parameter group, a difference parameter group (80) indicating a difference between the change parameter group and the initial parameter group.
[Configuration 3]
   The control system according to Configuration 2, wherein the memory of the drive apparatus has a region (E1) for holding the initial parameter group; and
   the drive apparatus restores (3204) the change parameter group by changing the initial parameter group held in the memory using the difference parameter group received via the network.
[Configuration 4]
   The control system according to Configuration 1, wherein the parameter generation portion
   generates a change parameter group (65) changed in accordance with the user operation from an initial parameter group (60); and
   the size reduction portion
   generates a compressed change parameter group (75) as the reduced-size parameter group.
[Configuration 5]
   The control system according to Configuration 4, wherein the drive apparatus restores (3204) the change parameter group by decompressing the compressed change parameter group received via the network.
[Configuration 6]
   The control system according to Configuration 4, wherein the drive apparatus restores the change parameter group by decompressing, in accordance with a command received via the network, the compressed change parameter group received via the network.
[Configuration 7]
   The control system according to any one of Configurations 2 to 6, wherein the second instruction is transmitted via a connection (4) formed using the network between the second controller and the drive apparatus;
   the support apparatus
   includes a first calculation portion (5107) that calculates, from the change parameter group, first data (85) indicating validity of this change parameter group in accordance with a predetermined formula, and the support apparatus transfers the calculated first data to the second controller;
   the drive apparatus
   includes a second calculation portion (3205) that calculates, from the restored change parameter group, a second data (90) indicating validity of this restored change parameter group in accordance with the predetermined formula, and
   notifies establishment of the connection to the second controller when comparison of the first data received from the second controller and the calculated second data indicates a match (T53).
[Configuration 8]
   A support apparatus (500) connected to a control system (1), wherein
   the control system includes:
   a first controller (100), and
   a drive apparatus (300) for driving a motor (400) in accordance with a first instruction from the first controller, wherein
   the drive apparatus includes a memory that storing a safety program (3202) for implementing a safety function relating to the drive of the motor, and a parameter group (70) referenced at the time of the execution of the safety program;
   the control system further includes:
      a second controller (200) that transmits a second instruction related to work of the safety function to the drive apparatus, and
      a network (2) for sharing data with each other between the first controller, the drive apparatus, and the second controller; and
      the support apparatus includes:
         a parameter generation portion (5105)) that generates the parameter group in accordance with a user operation on this support apparatus, and
         a size reduction portion (5106) that reduces a size of the generated parameter group in a way capable of restoring the parameter group by the drive apparatus when the generated parameter group is transferred via the network.
[Configuration 9]
   A program executed by an information processing apparatus (500) connected to a control system (1), wherein
   the control system includes:
   a first controller (100), and
   a drive apparatus (300) for driving a motor (400) in accordance with a first instruction from the first controller, wherein
   the drive apparatus includes a memory that stores a safety program (3202) for implementing a safety function relating to the drive of the motor, and a parameter group (70) referenced at the time of the execution of the safety program;
   the control system further includes:
      a second controller (200) that transmits a second instruction related to work of the safety function to the drive apparatus, and
      a network (2) for sharing data with each other between the first controller, the drive apparatus, and the second controller; and
      the program causes a processor of the information processing apparatus to execute
      a step (T1) of generating the parameter group in accordance with a user operation on the information processing apparatus, and
      a step (T3, T3a) of reducing a size of this parameter group in a way capable of restoring the parameter group by the drive apparatus when the generated parameter group is transferred via the network.

The embodiment disclosed this time should be considered to be exemplary in all respects, but not restrictive. The scope of the present invention is indicated by the claims, but not by the above description, and meanings equal to the claims and all modifications within the scope are intended to be included.

### [Reference Signs List]

- 1: control system

- 2: field network
- 4: logic connection
- 60: initial parameter group
- 65: change parameter group
- 70: restoration parameter group
- 75: compressed parameter group
- 80: difference parameter group
- 85, 90: CRC data
- 100: standard controller
- 102, 202, 312, 314, 502: processor
- 104, 204, 316, 504: main memory
- 106: upper network controller
- 108, 208, 302: field network controller
- 110,210,320,510: storage
- 200: safety controller
- 276, 376: logic connection layer
- 277: establishment module
- 371, 532: parameter manager
- 500: support apparatus
- 506: input portion
- 530: operation reception portion
- 3202: motion safety program
- 3204: restoration program
- 3205, 5107: CRC calculation program
- 5104: support program
- 5105: parameter generation program
- 5106: reduced-size program
- E1, E2, E3, E4: region
- S1, S2, S3, S5: flow

## Claims

1. A control system, comprising: a first controller; and
a drive apparatus for driving a motor in accordance with a first instruction from the first controller, wherein
the drive apparatus comprises a memory that stores a safety program for implementing a safety function relating to the drive of the motor, and a parameter group referenced at the time of the execution of the safety program; and
the control system further comprises: a second controller that transmits a second instruction related to work of the safety function to the drive apparatus;
a network for sharing data with each other between the first controller, the drive apparatus, and the second controller; and
a support apparatus capable of being connected to the network, wherein
the support apparatus comprises:
a parameter generation portion that generates the parameter group in accordance with a user operation on this support apparatus, and
a size reduction portion that reduces a size of the parameter group in a way capable of restoring the parameter group by the drive apparatus when the generated parameter group is transferred via the network.

2. The control system according to claim 1, wherein the parameter generation portion
generates a change parameter group changed in accordance with the user operation from an initial parameter group; and
the size reduction portion
generates, as the reduced-size parameter group, a difference parameter group indicating a difference between the change parameter group and the initial parameter group.

3. The control system according to claim 2, wherein the memory of the drive apparatus has a region for holding the initial parameter group; and
the drive apparatus restores the change parameter group by changing the initial parameter group held in the memory using the difference parameter group received via the network.

4. The control system according to claim 1, wherein the parameter generation portion
generates a change parameter group changed in accordance with the user operation from an initial parameter group; and
the size reduction portion
generates a compressed change parameter group as the reduced-size parameter group.

5. The control system according to claim 4, wherein the drive apparatus restores the change parameter group by decompressing the compressed change parameter group received via the network.

6. The control system according to claim 4, wherein the drive apparatus restores the change parameter group by decompressing, in accordance with a command received via the network, the compressed change parameter group received via the network.

7. The control system according to any one of claims 2 to 6, wherein the second instruction is transmitted via a connection formed using the network between the second controller and the drive apparatus;
the support apparatus
comprises a first calculation portion that calculates, from the change parameter group, first data indicating validity of this change parameter group in accordance with a predetermined formula, and the support apparatus transfers the calculated first data to the second controller;
the drive apparatus
comprises a second calculation portion that calculates, from the restored change parameter group, second data indicating validity of this restored change parameter group in accordance with the predetermined formula, and
notifies establishment of the connection to the second controller when comparison of the first data received from the second controller and the calculated second data indicates a match.

8. A support apparatus connected to a control system, wherein
the control system comprises:
a first controller, and
a drive apparatus for driving a motor in accordance with a first instruction from the first controller, wherein
the drive apparatus comprises a memory that stores a safety program for implementing a safety function relating to the drive of the motor, and a parameter group referenced at the time of the execution of the safety program;
the control system further comprises:
a second controller that transmits a second instruction related to work of the safety function to the drive apparatus, and
a network for sharing data with each other between the first controller, the drive apparatus, and the second controller; and
the support apparatus comprises:
a parameter generation portion that generates the parameter group in accordance with a user operation on this support apparatus, and
a size reduction portion that reduces a size of the parameter group in a way capable of restored the parameter group by the drive apparatus when the generated parameter group is transferred via the network.

9. A program executed by an information processing apparatus connected to a control system, wherein
the control system comprises:
a first controller, and
a drive apparatus for driving a motor in accordance with a first instruction from the first controller, wherein
the drive apparatus comprises a memory that stores a safety program for implementing a safety function relating to the drive of the motor, and a parameter group referenced at the time of the execution of the safety program;
the control system further comprises:
a second controller that transmits a second instruction related to work of the safety function to the drive apparatus, and
a network for sharing data with each other between the first controller, the drive apparatus, and the second controller; and
the program causes a processor of the information processing apparatus to execute
a step of generating the parameter group in accordance with a user operation on the information processing apparatus, and
a step of reducing a size of the parameter group in a way capable of restoring the parameter group by the drive apparatus when the generated parameter group is transferred via the network.
